(19) Europäisches Patentamt / European Patent Office / Office européen des brevets

(11) **EP 3 812 167 A1**

(12) **EUROPEAN PATENT APPLICATION**
published in accordance with Art. 153(4) EPC

(43) Date of publication:
**28.04.2021 Bulletin 2021/17**

(51) Int Cl.:
**B60C 1/00** *(2006.01)*    **B60C 9/20** *(2006.01)*
**B60C 15/04** *(2006.01)*    **D07B 1/06** *(2006.01)*

(21) Application number: **19823292.8**

(22) Date of filing: **13.06.2019**

(86) International application number:
**PCT/JP2019/023516**

(87) International publication number:
**WO 2019/244772 (26.12.2019 Gazette 2019/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **22.06.2018   JP 2018119352**

(71) Applicant: **Bridgestone Corporation**
**Chuo-Ku**
**Tokyo 104-8340 (JP)**

(72) Inventor: **KURATA, Takayuki**
**Tokyo 104-8340 (JP)**

(74) Representative: **Oxley, Robin John George**
**Marks & Clerk LLP**
**15 Fetter Lane**
**London EC4A 1BW (GB)**

(54) **RESIN-COVERED CORDS AND PNEUMATIC TIRE**

(57)    A resin-covered cord including n number of individual cords, disposed so as to be mutually spaced apart from each other, a covering resin that covers the cords, and an adhesive resin that is disposed between the cords and the covering resin and that has a greater tensile elastic modulus than the covering resin. Equation (1) below is satisfied, in which A is a total value of a width direction dimension of a portion where the cords and the adhesive resin are disposed, and B is a maximum value of a thickness direction dimension.

$$B < (A/n) \qquad (n \geq 1) \qquad \text{Equation (1)}$$

FIG.3A

EP 3 812 167 A1

**Description**

Technical Field

The present disclosure relates to a resin-covered cord and a pneumatic tire.

Background Art

Japanese Patent Application Laid-Open (JP-A) No. 2014-210487 discloses a tire in which a reinforcing cord member (a resin-covered cord) is formed by covering a reinforcing cord with a resin covering layer, and the reinforcing cord member is wound in a spiral pattern around a crown portion of a tire frame member to form a belt layer. Tires in which a belt layer (resin-covered belt layer) is formed using resin in this manner have a higher out-of-plane rigidity at the crown portion than tires in which a belt layer (rubber-covered belt layer) is formed using rubber.

SUMMARY OF INVENTION

Technical Problem

In order to form a resin-covered belt layer such as that disclosed in JP-A No. 2014-210487, an adhesive resin is preferably provided at the periphery of the reinforcing cord in order to raise the level of integration between the reinforcing cord and a covering resin of the resin-covered cord. However, depending on the shape and the elastic modulus of the adhesive resin, it may be difficult to secure in-plane rigidity of the resin-covered cord and of the resin-covered belt layer formed using the resin-covered cord.
The present disclosure secures in-plane rigidity of a resin-covered cord and in-plane rigidity of a member formed using the resin-covered cord.

Solution to Problem

A resin-covered cord of a first aspect includes n number of individual cords, disposed so as to be mutually spaced apart from each other, a covering resin that covers the cords, and an adhesive resin that is disposed between the cords and the covering resin and that has a greater tensile elastic modulus than the covering resin. The following Equation (1) is satisfied, in which A is a total value of a width direction dimension of a portion where the cords and the adhesive resin are disposed, and B is a maximum value of a thickness direction dimension.

$$B < (A/n) \qquad (n \geq 1) \qquad \text{Equation (1)}.$$

In the resin-covered cord of the first aspect, the adhesive resin is used to adhere the cord and the covering resin together. The n individual cords are embedded within the covering resin, and A, namely "the total value of the width direction dimension of the portion where the cord and the adhesive resin are disposed" divided by n is greater than B, namely "the maximum value of the thickness direction dimension of the portion where the cord and the adhesive resin are disposed".
Namely, on a cord-by-cord basis, the adhesive resin has a larger width direction dimension than thickness direction dimension. Moreover, the tensile elastic modulus of the adhesive resin is greater than that of the covering resin. The rigidity of the resin-covered cord along the width direction (namely in-plane rigidity) is thus greater than it would be in a case in which the width direction dimension were not greater than the thickness direction dimension on a cord-by-cord basis.
In a resin-covered cord of a second aspect, the adhesive resin is continuous in the width direction.
In the resin-covered cord of the second aspect, the adhesive resin covering the n individual cords is continuous in the width direction. Rigidity can accordingly be improved since there are fewer portions with a low tensile elastic modulus than would be present in cases in which the adhesive resin were not continuous.
A pneumatic tire of a third aspect includes a carcass that is formed spanning a pair of bead cores, and a resin-covered belt layer that is disposed at a tire radial direction outside of the carcass and that is formed by winding the resin-covered cord of claim 1 or claim 2 in a spiral pattern.
In the pneumatic tire of the third aspect, the resin-covered belt layer is formed by winding the resin-covered cord of claim 1 or claim 2 in a spiral pattern. The ring rigidity is therefore higher than it would be were a cord to be covered in rubber to configure a rubber-covered belt layer, or were a resin-covered belt layer to be configured without winding the resin-covered cord in a spiral pattern. An annular surface of a tread running in the tire circumferential direction and the tire width direction is thus less susceptible to out-of-plane deformation, thereby suppressing deformation of the pneumatic tire.

Moreover, due to the high in-plane rigidity of the resin-covered cord of the first aspect or the second aspect, the resin-covered belt layer applied with the resin-covered cord is less susceptible to shear deformation, and cornering power is enhanced.

Furthermore, since peripheral cracking of the resin-covered cord of the first aspect or the second aspect is suppressed, out-of-plane deformation of the resin-covered belt layer can be suppressed. Moreover, the durability of the pneumatic tire is raised since ingress of water into the resin-covered cord through such cracks is also suppressed.

A pneumatic tire of a fourth aspect includes a pair of bead cores, each formed by winding the resin-covered cord of claim 1 or claim 2 in a spiral pattern, a carcass that is formed spanning the bead cores, and a belt layer that is disposed at a tire radial direction outside of the carcass.

In the pneumatic tire of the fourth aspect, the bead core is formed by winding the resin-covered cord of claim 1 or claim 2 in a spiral pattern. The twisting rigidity of the bead core is thus higher than it would be for a bead core configured from a rubber-covered cord. This makes a bead portion less susceptible to rim detachment.

Moreover, since peripheral cracking of the resin-covered cord of the first aspect or the second aspect is suppressed, out-of-plane deformation can also be suppressed. This enables rim detachment of the bead portion to be suppressed.

Advantageous Effects of Invention

The present disclosure is capable of securing in-plane rigidity of a resin-covered cord and in-plane rigidity of a member formed using the resin-covered cord.

BRIEF DESCRIPTION OF DRAWINGS

Fig. 1 is a cross-section illustrating an example of half of a pneumatic tire formed using a resin-covered cord according to an exemplary embodiment of the present disclosure.
Fig. 2 is a perspective view illustrating an example of a resin-covered belt layer formed using a resin-covered cord according to an exemplary embodiment of the present disclosure.
Fig. 3A is a cross-section illustrating part of a resin-covered belt layer of a pneumatic tire.
Fig. 3B is a cross-section illustrating a resin-covered cord that forms a resin-covered belt layer of a pneumatic tire.
Fig. 4A is a cross-section illustrating a modified example of an exemplary embodiment of the present disclosure in which a resin-covered cord is formed with a rectangular cross-section profile.
Fig. 4B is a cross-section illustrating a modified example of an exemplary embodiment of the present disclosure in which two reinforcing cords are embedded in a resin-covered cord.
Fig. 4C is a cross-section illustrating a modified example of an exemplary embodiment of the present disclosure in which an isthmus portion is formed in adhesive resin of a resin-covered cord.
Fig. 4D is a cross-section illustrating a modified example of an exemplary embodiment of the present disclosure in which three reinforcing cords are embedded in a resin-covered cord.
Fig. 5A is a cross-section illustrating a modified example of an exemplary embodiment of the present disclosure in which adhesive resin surrounds two reinforcing cords discretely in a resin-covered cord.
Fig. 5B is a cross-section illustrating a modified example of an exemplary embodiment of the present disclosure in which adhesive resin surrounds two reinforcing cords discretely at local portions in an extension direction of a resin-covered cord.
Fig. 5C is a cross-section illustrating a modified example of an exemplary embodiment of the present disclosure in which adhesive resin surrounds three reinforcing cords is discretely in a resin-covered cord.
Fig. 6A is a side view illustrating a modified example of an exemplary embodiment of the present disclosure in which a bead core in a pneumatic tire is formed using a resin-covered cord.
Fig. 6B is a cross-section illustrating a bead core formed using a resin-covered cord in a pneumatic tire according to an exemplary embodiment of the present disclosure.

DESCRIPTION OF EMBODIMENTS

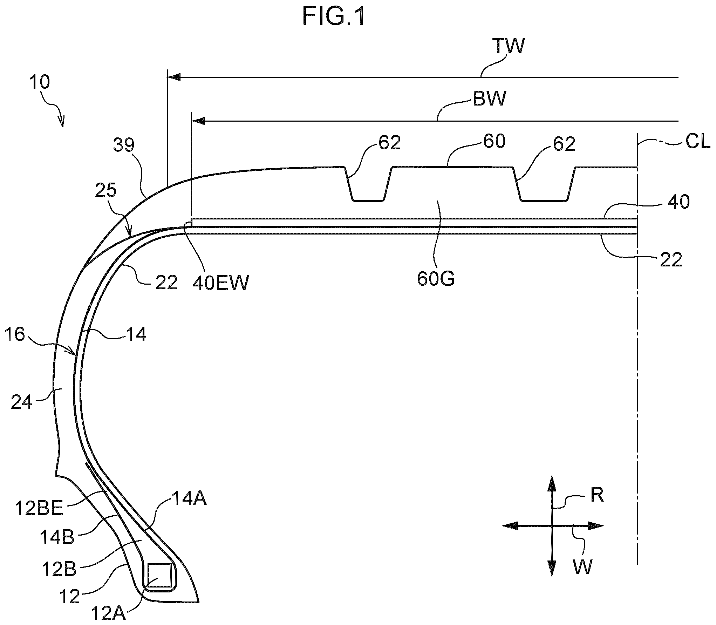

Fig. 1 is a cross-section illustrating one side of a pneumatic tire (referred to hereafter as a tire 10) according to an exemplary embodiment of the present disclosure, as sectioned along a tire width direction and a tire radial direction (namely a cross-section as viewed along a tire circumferential direction). In the drawings, the arrow W indicates a width direction of the tire 10 (namely a tire width direction), and the arrow R indicates a radial direction of the tire 10 (namely a tire radial direction). Note that the tire width direction refers to a direction running parallel to the rotation axis of the tire 10. The tire radial direction refers to a direction orthogonal to the rotation axis of the tire 10. The letters CL indicate an equatorial plane (namely a tire equatorial plane) of the tire 10. Note that Fig. 1 illustrates the shape of the pneumatic tire 10 in a natural state prior to being inflated with air.

In the present exemplary embodiment, a tire radial direction side toward the rotation axis of the tire 10 is referred to as the tire radial direction inside, and a tire radial direction side further away from the rotation axis of the tire 10 is referred to as the tire radial direction outside. A tire width direction side toward the tire equatorial plane CL is referred to as the tire width direction inside, and a tire width direction side further away from the tire equatorial plane CL is referred to as the tire width direction outside.

Tire

As illustrated in Fig. 1, the tire 10 includes a pair of bead portions 12, a carcass 16 straddling between bead cores 12A embedded in the respective bead portions 12 and including end portions anchored to the respective bead cores 12A, bead fillers 12B embedded in the respective bead portions 12 so as to extend from the bead cores 12A toward the tire radial direction outside along an outer surface of the carcass 16, a resin-covered belt layer 40 provided at the tire radial direction outside of a carcass ply 14, and a tread 60 provided at the tire radial direction outside of the resin-covered belt layer 40. Note that only the bead portion 12 on one side is illustrated in Fig. 1.

Bead Portions

The bead cores 12A are each configured from a wire bundle, and are embedded in the respective pair of bead portions 12. The carcass ply 14 straddles between the bead cores 12A. Various structures, for example structures with circular or polygonal shaped cross-section profiles, may be adopted for the bead cores 12A. A hexagonal shape may be adopted as an example of a polygonal shape; however, in the present exemplary embodiment a four-sided shape is employed.

In each of the bead portions 12, the bead filler 12B is embedded in a region enclosed by the carcass ply 14 anchored to the corresponding bead core 12A. The bead filler 12B extends from the bead core 12A toward the tire radial direction outside so as to gradually decrease in thickness on progression toward the tire radial direction outside. Each of the bead portions 12 is configured by a portion of the tire 10 spanning from a tire radial direction outside end 12BE of the corresponding bead filler 12B toward the tire radial direction inside.

Carcass

The carcass 16 is a configured of a sheet of the carcass ply 14 formed by covering plural cords with covering rubber. The carcass ply 14 configures a tire frame extending in a toroid shape from one of the bead cores 12A to the other of the bead cores 12A. End portion sides of the carcass ply 14 are anchored to the respective bead cores 12A. Specifically, the carcass ply 14 includes a main portion 14A straddling from the one bead core 12A to the other bead core 12A, and folded-back portions 14B that are folded back on themselves toward the tire radial direction outside around the respective bead cores 12A.

Note that the carcass ply 14 of the present exemplary embodiment is a radial carcass. There is no particular limitation to the material employed for the carcass ply 14, and Rayon, Nylon, polyethylene naphthalate (PEN), polyethylene terephthalate (PET), an aramid, glass fibers, carbon fibers, steel, or the like may be employed therefor. From the perspective of weight reduction, an organic fiber cord is preferable. Although a range of from 20 to 60 strands per 50 mm are incorporated in the carcass, there is no limitation to this range. Moreover, although the carcass 16 is configured of a single sheet of the carcass ply 14 in the present exemplary embodiment, the carcass 16 may be configured of plural carcass ply sheets.

An inner liner 22 formed of rubber is disposed at the tire radial direction inside of the carcass 16. A side rubber layer 24 formed of rubber is disposed at the tire width direction outsides of the carcass 16. In the present exemplary embodiment, a tire case 25 is configured by the bead cores 12A, the carcass 16, the bead filler 12B, the inner liner 22, and the side rubber layer 24. In other words, the tire case 25 configures a tire frame member forming a frame of the pneumatic tire 10.

Resin-Covered Belt Layer

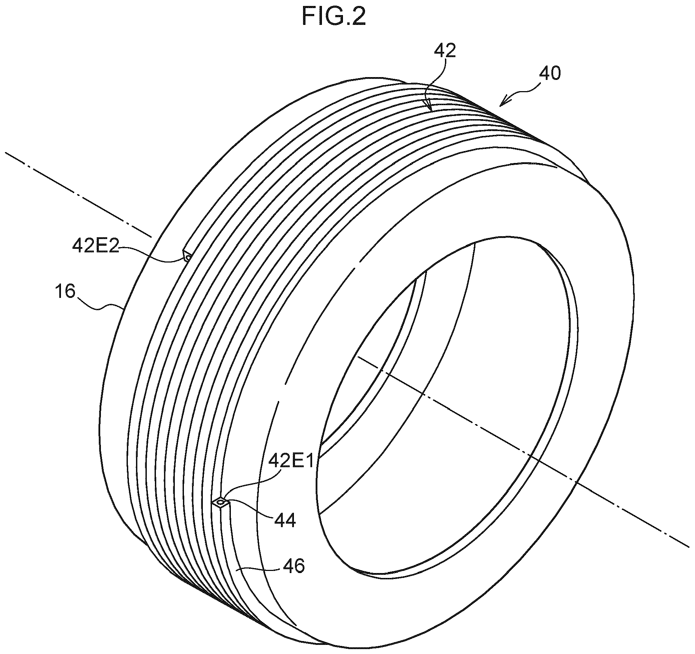

The resin-covered belt layer 40 is laid at the outside of a crown portion of the carcass 16, in other words at the tire radial direction outside of the carcass 16. As illustrated in Fig. 2, the resin-covered belt layer 40 serves as a ring-shaped hoop, and is formed by winding a single resin-covered cord 42 around an outer circumferential surface of the carcass 16 in a spiral pattern in the tire circumferential direction. Two circumferential direction leading end faces 42E1, 42E2 of the resin-covered cord 42 configure faces running along the tire width direction and radial direction, and are disposed at different positions to each other in the tire circumferential direction. Note that the spiral pattern referred to here indicates a state in which the single resin-covered cord 42 is wound around at least one full circuit of the periphery of the carcass 16. In the present specification, the "resin-covered belt layer" is also referred to simply as the "belt layer" where appropriate.

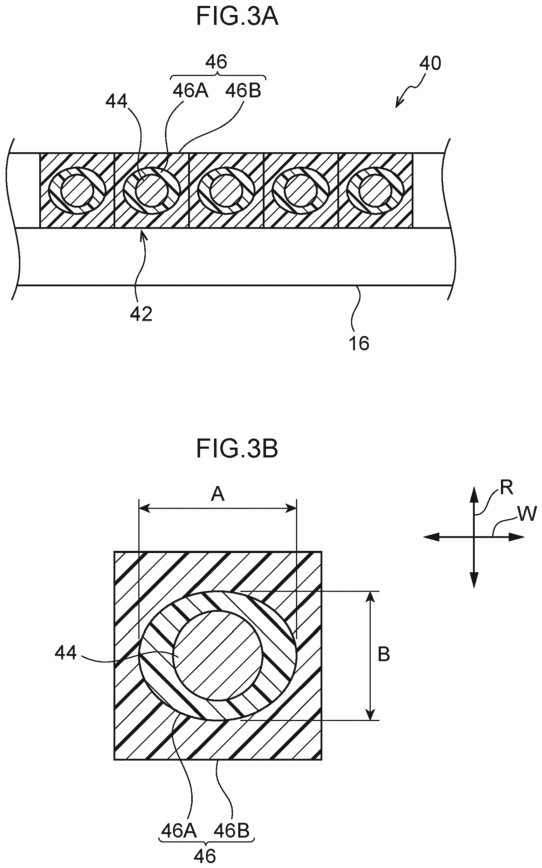

As illustrated in Fig. 3A, the resin-covered cord 42 is configured by covering a single reinforcing cord 44 with a resin layer 46, and has a substantially square shaped cross-section profile. The resin layer 46 is tightly bonded to an outer circumferential surface of the carcass 16 using an adhesive or by vulcanization adhesion. Note that the resin-covered belt layer 40 and the tread 60 are integrated together using an adhesive or by vulcanization adhesion.

The resin layer 46 is bonded so as to fuse together mutually adjacent locations thereof in the tire width direction. The resin-covered belt layer 40 is formed from the reinforcing cord 44 covered by the resin layer 46 in this manner.

The resin layer 46 is formed of an adhesive resin 46A and a covering resin 46B. The adhesive resin 46A is an adhesive layer for increasing the level of integration between the reinforcing cord 44 and the covering resin 46B. As illustrated in Fig. 3B, when A is a width direction (W direction) dimension and B is a maximum value of a thickness direction (R direction) dimension of a portion where the reinforcing cord 44 and the adhesive resin 46A are disposed, Equation (1-1) below is satisfied. Namely, the width direction dimension of a cross-section of the adhesive resin 46A including the reinforcing cord 44 is greater than the thickness direction dimension thereof.

$$B < A \quad (1\text{-}1)$$

Note that the thickness direction is a direction aligned with the tire radial direction when the resin-covered cord 42 has been laid on the outer circumferential surface of the carcass 16. The width direction is a direction aligned with the tire width direction. In cases in which plural reinforcing cords 44 are embedded inside the resin layer 46 (described in detail later), the width direction is a direction that substantially corresponds to an array direction of the reinforcing cords 44.

The tensile elastic modulus of the covering resin 46B (as defined in JIS K7113: 1995) is preferably no less than 100 MPa. An upper limit of the tensile elastic modulus of the covering resin 46B is preferably no greater than 1000 MPa. Note that the tensile elastic modulus of the covering resin 46B is particularly preferably within a range of from 200 MPa to 700 MPa. The tensile elastic modulus of the adhesive resin 46A is preferably set greater than the tensile elastic modulus of the covering resin 46B, and specifically set one to five times greater than the tensile elastic modulus of the covering resin 46B.

The covering resin 46B is configured by a thermoplastic resin. Note that exemplary embodiments of the present disclosure are not limited thereto, and for example a thermoplastic elastomer, a thermosetting resin, a general purpose resin such as a (meth)acrylic-based resin, an EVA resin, a vinyl chloride resin, a fluorine-based resin, or a silicone-based resin, or an engineering plastic (encompassing super engineering plastics) may be employed as this resin material. Note that these resin materials do not include vulcanized rubber.

Thermoplastic resins (including thermoplastic elastomers) are polymer compounds of materials that soften and flow with increased temperature, and that adopt a relatively hard and strong state when cooled. In the present specification, out of these, polymer compounds forming materials that soften and flow with increasing temperature, that adopt a relatively hard and strong state on cooling, and that have a rubber-like elasticity are considered to be thermoplastic elastomers. Polymer compounds forming materials that soften and flow with increasing temperature, that adopt a relatively hard and strong state on cooling, and do not have a rubber-like elasticity are considered to be non-elastomer thermoplastic resins.

Examples of thermoplastic resins (thermoplastic elastomers included) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically crosslinking-type thermoplastic elastomers (TPV), as well as thermoplastic polyolefin-based resins, thermoplastic polystyrene-based resins, thermoplastic polyamide-based resins, and thermoplastic polyester-based resins.

For example, a material with deflection temperature under load (namely under a load of 0.45 MPa) as defined in ISO 75-2 and ASTM D648 of 78°C or above, a tensile yield strength as defined in JIS K7161 of 10 MPa or above, a tensile elongation at break as also defined in JIS 7161 of 50% or above, and a Vicat softening temperature as defined in JIS K7206 (method A) of 130°C may be employed as the above thermoplastic material.

Thermosetting resins are curable polymer compounds that form a 3 dimensional mesh structure with increasing temperature. Examples of thermosetting resins include phenolic resins, epoxy resins, melamine resins, and urea resins.

Note that instead of thermoplastic resins (including thermoplastic elastomers) or thermosetting resins such as those described above, a general purpose resin such as a (meth)acrylic-based resin, an EVA resin, a vinyl chloride resin, a fluorine-based resin, or a silicone-based resin may be employed as the covering resin 46B.

A material that is less susceptible to moisture permeation, in other words that is less susceptible to moisture absorption, than the covering resin 46B is employed as the adhesive resin 46A. Examples of an adhesive configuring the adhesive resin 46A include materials having as a main component (main agent) one type or two or more types of thermoplastic resin out of a modified olefin-based resin (a modified polyethylene-based resin, a modified polypropylene-based resin, or the like), a polyamide-based resin, a polyurethane-based resin, a polyester-based resin, a modified polyester-based resin, an ethylene-ethyl acrylate copolymer, an ethylene-vinyl acetate copolymer, or the like.

Of these, from the perspective of adhesive properties between a metal member (the reinforcing cord 44) and a resin layer (the covering resin 46B), preferably a hot melt adhesive is employed containing at least one item selected from the group consisting of a modified olefin-based resin, a polyester-based resin, a modified polyester-based resin, an ethylene-ethyl acrylate copolymer, and an ethylene-vinyl acetate copolymer. More preferably employed is a hot melt adhesive containing at least one item selected from the group consisting of a modified polyester-based resin and a modified polyester-based resin. Even more preferably employed from out of these is a hot melt adhesive containing at least one item selected from the group consisting of an acid-modified olefin-based resin (a modified olefin-based resin subjected to acid modification using unsaturated carboxylic acid) and a modified polyester-based resin, and particularly preferably employed is a hot melt adhesive containing an acid-modified polyester-based resin.

Note that "a modified olefin-based resin subjected to acid modification using unsaturated carboxylic acid" refers to a modified olefin-based resin copolymer in which unsaturated carboxylic acid has been graft copolymerized to a polyolefin.

The reinforcing cord 44 of the resin-covered belt layer 40 is configured from a steel cord, the outer peripheral surface of which is cobalt-plated. This steel cord has a main component of steel and may include a minor amount of various other substances, such as carbon, manganese, silicon, phosphorus, sulfur, copper, or chromium. The plating material is not limited to cobalt, and nickel or the like may be employed therefor.

A width BW of the resin-covered belt layer 40 as measured along the tire axial direction (namely the distance between belt ends 40EW) is preferably no less than 75% of a ground contact width TW of the tread 60 as measured along the tire axial direction. This enables rigidity to be raised in the vicinity of shoulders 39. Note that an upper limit of the width BW of the resin-covered belt layer 40 is preferably 110% of the ground contact width TW. This enables an increase in the weight of the tire 10 to be suppressed.

Note that the ground contact width TW of the tread 60 refers to when the tire 10 is fitted to a standard rim, as defined in the 2018 edition of the Japan Automobile Tyre Manufacturers Association (JATMA) Year Book, inflated to an internal pressure of 100% air pressure (maximum air pressure) corresponding to the maximum load capacity (load shown in bold in the internal pressure-load capacity correspondence table) for the applicable JATMA Year Book size/ply rating, disposed such that the rotation axis lies parallel with a horizontal flat plate when stationary, and applied with weight corresponding to the maximum load capacity. In cases in which TRA standards or ETRTO standards apply in the location of use or manufacturing location, then the corresponding standards are adhered to.

Note that exemplary embodiments of the present disclosure are not limited to the above, and the steel cord employed as the reinforcing cord 44 of the resin-covered belt layer 40 may employ a monofilament cord, or cord in which plural filaments are twisted together. Alternatively, organic fibers of an aramid or the like, or of carbon or the like, may be employed as the material instead of steel. Various twisting structure designs may be adopted, and various cross-section structures, twisting pitches, twisting directions, and distances between adjacent filaments may be employed. Furthermore, cord in which filaments of different materials are twisted together may be employed, and there is no particular limitation to the cross-section structure thereof, for which various twisting structures, such as single twists, layered twists, compound twists, or the like may be adopted.

Tread

As illustrated in Fig. 1, the tread 60 is provided at the tire radial direction outside of the resin-covered belt layer 40. The tread 60 is a location that makes ground contact with the road surface during travel, and a tread face of the tread 60 is formed with plural circumferential direction grooves 62 extending in the tire circumferential direction. The shapes and number of the circumferential direction grooves 62 are set as appropriate according to the water expelling properties, steering stability performance, and the like demanded of the tire 10.

Operation

In the resin-covered cord 42 according to the present exemplary embodiment of the present disclosure, the adhesive resin 46A is used to adhere the covering resin 46B to the reinforcing cord 44. As per Equation (1-1), a cross-section of the adhesive resin 46A including the reinforcing cord 44 has a greater width direction dimension than thickness direction dimension. The adhesive resin 46A also has a greater tensile elastic modulus than the covering resin 46B.

The rigidity of the resin-covered cord 42 along the width direction (W direction) (namely in-plane rigidity) is thus higher than it would be in a case in which the width direction dimension of the adhesive resin 46A were not greater than the thickness direction dimension thereof. Moreover, the change in the tensile elastic modulus (namely a step change in rigidity) at the periphery of the reinforcing cord 44 is smoother than it would be in a case in which the tensile elastic modulus of the adhesive resin 46A were not greater than the tensile elastic modulus of the covering resin 46B, thereby enabling cracking at the periphery of the reinforcing cord 44 to be suppressed.

Moreover, in the tire 10 according to the present exemplary embodiment of the present disclosure, the resin-covered cord 42 is wound in a spiral pattern to form the resin-covered belt layer 40. The ring rigidity is therefore higher than it would be were the reinforcing cord 44 to be covered in rubber to configure a rubber-covered belt layer, or were a resin-covered belt layer to be configured without winding the resin-covered cord 42 in a spiral pattern. An annular surface of the tread 60 running in the tire circumferential direction and the tire width direction is therefore less susceptible to out-of-plane deformation, thereby suppressing deformation of the tire 10.

Moreover, the in-plane rigidity of the resin-covered cord 42 is increased by forming the adhesive resin 46A such that the width direction dimension is greater than the thickness direction dimension thereof. The resin-covered belt layer 40 applied with the resin-covered cord 42 is therefore less susceptible to shear deformation, and cornering power is enhanced.

Furthermore, cracking of the resin-covered cord 42 is suppressed as a result of smoothing the change in the tensile elastic modulus at the periphery of the reinforcing cord 44, enabling out-of-plane deformation of the resin-covered belt layer 40 to be suppressed. Moreover, the durability of the tire 10 is raised since ingress of water into the resin-covered cord 42 through such cracks is also suppressed.

Furthermore, the adhesive resin 46A that is less susceptible to moisture permeation than the covering resin 46B is provided at the outer periphery of the reinforcing cord 44. This enables corrosion (rusting) of the reinforcing cord 44 to be suppressed compared to cases in which an adhesive layer that is readily permeable to moisture is provided.

As illustrated in Fig. 3B, in the present exemplary embodiment of the present disclosure, the resin-covered cord 42 is configured by covering the single reinforcing cord 44 with the resin layer 46, and the resin-covered cord 42 has a substantially square cross-section profile. However, exemplary embodiments of the present disclosure are not limited thereto.

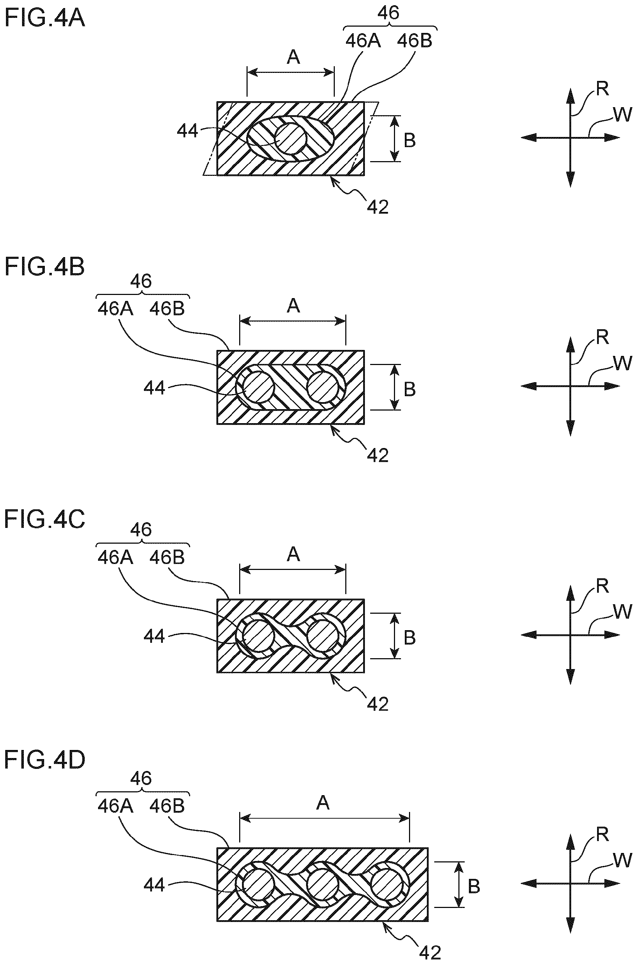

For example, as illustrated in Fig. 4A, the resin layer 46 may have a rectangular cross-section profile with its long sides running along a direction corresponding to the width direction (W direction). Alternatively, as illustrated by the double-dotted dashed lines in Fig. 4A, the resin layer 46 may have a parallelogram-shaped cross-section profile in which the tire width direction end faces thereof are inclined with respect to the thickness direction (R direction). In such cases also, a cross-section of the adhesive resin 46A including the reinforcing cord 44 has a greater width direction dimension A than thickness direction dimension B, such that the previously described equation (1-1) is satisfied.

Alternatively, plural reinforcing cords 44 may be embedded in the resin-covered cord 42. Fig. 4B illustrates an example in which two reinforcing cords 44 are covered with the resin layer 46 to form the resin-covered cord 42. Fig. 4C illustrates an example in which two reinforcing cords 44 are covered with the resin layer 46, and an isthmus portion is formed at a width direction central portion of the adhesive resin 46A (between the reinforcing cords 44). Fig. 4D illustrates an example in which three reinforcing cords 44 are covered with the resin layer 46, and isthmus portions are formed between the respective reinforcing cords 44. In Fig. 4B, Fig. 4C, and Fig. 4D, the adhesive resin 46A is continuous between the peripheries of the respective reinforcing cords 44.

When the adhesive resin 46A covering plural of the reinforcing cords 44 is continuous in this manner, in-plane rigidity can be improved since there are fewer portions with a low tensile elastic modulus than would be present in cases in which the adhesive resin 46A were not continuous. In such cases also, a cross-section of the adhesive resin 46A including the reinforcing cords 44 has a width direction dimension A than thickness direction dimension B, such that the previously described equation (1-1) is satisfied.

In cases in which plural of the reinforcing cords 44 are covered by the resin layer 46 to form the resin-covered cord 42 as illustrated in Fig. 4A and Fig. 4B, the following equation (1-2) is satisfied in addition to equation (1-1), with n being the number of the reinforcing cords 44. Namely, a value of A, this being "a width direction dimension of portions where the reinforcing cords 44 and the adhesive resin 46A are disposed" divided by n is greater than B, this being "a maximum value of a thickness direction dimension of portions where the reinforcing cords 44 and the adhesive resin 46A are disposed".

$$B < (A/n) \qquad (1\text{-}2)$$

Note that "a maximum value of a thickness direction dimension" refers to the maximum dimension of a straight line drawn along the thickness direction of the adhesive resin 46A so as to intersect the portion where the reinforcing cords 44 and the adhesive resin 46A are disposed.

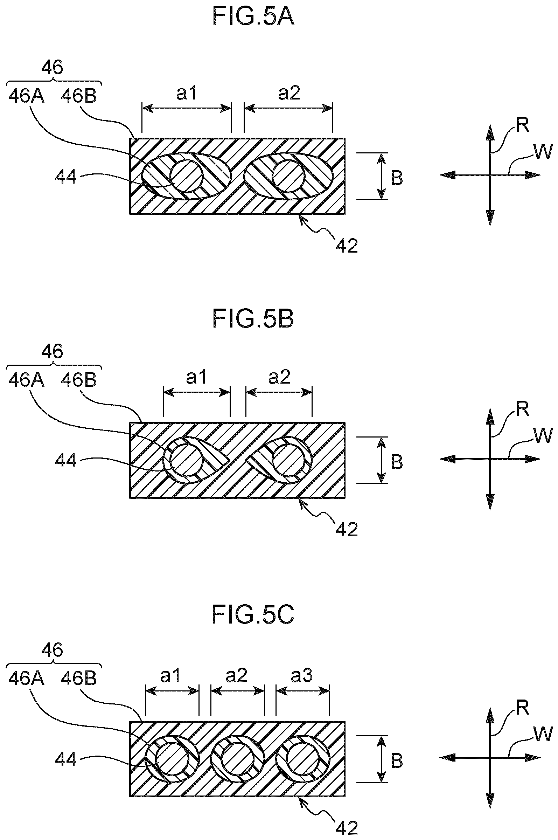

Note that in cases in which plural of the reinforcing cords 44 are embedded in the resin-covered cord 42, the adhesive resin 46A at the periphery of the respective reinforcing cords 44 does not necessarily have to be continuous. For example, as illustrated in Fig. 5A, Fig. 5B, and Fig. 5C, the adhesive resin 46A may be provided discretely for each of the reinforcing cords 44.

In the example illustrated in Fig. 5A, non-continuous adhesive resin 46A surrounds the two reinforcing cords 44 discretely; the present disclosure encompasses such exemplary embodiments. In such cases, the previously described equation (1-2) is satisfied when A is defined as the total value of the width direction dimensions a1, a2 of the portions where the reinforcing cords 44 and the adhesive resin 46A are disposed.

Similarly, in Fig. 5C, the previously described equation (1-2) is satisfied when A is defined as the total value of the width direction dimensions a1, a2, a3 of the portions where the reinforcing cords 44 and the adhesive resin 46A are disposed.

Alternatively, exemplary embodiments of the present disclosure may be configured such that both continuous and discrete locations of the adhesive resin 46A covering the reinforcing cords 44 are present locally along the extension direction of the resin-covered cord 42. Namely, for example, the profile illustrated in Fig. 4B, the profile illustrated in Fig. 4C, the profiles illustrated in Fig. 5B, or the like may be adopted locally along the extension direction of the resin-covered cord 42.

In such cases, as illustrated in Fig. 5B, in a cross-section where the adhesive resin 46A surrounding the respective reinforcing cords 44 is discrete, it is sufficient that the previously described equation (1-2) be satisfied when A is defined as the total value of the width direction dimensions a1, a2 of portions where the reinforcing cords 44 and the adhesive resin 46A are disposed.

In the present exemplary embodiment, the resin-covered cord 42 is employed to form the resin-covered belt layer 40. However, exemplary embodiments of the present disclosure are not limited thereto. For example, the resin-covered cord 42 may be employed to form the bead cores 12A illustrated in Fig. 1 in addition to the resin-covered belt layer 40, or instead of the resin-covered belt layer 40.

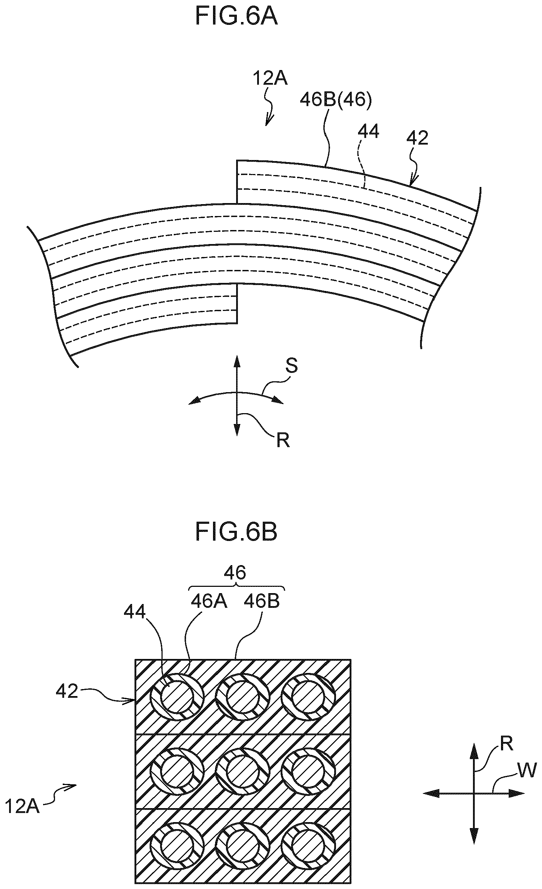

In such cases, as illustrated in Fig. 6A and Fig. 6B, the resin-covered cord 42 is wound in approximately three full circuits in the tire circumferential direction (arrow S direction). The covering resin 46B is bonded so as to fuse together mutually adjacent locations thereof in the tire radial direction. The respective bead cores 12A are formed by the reinforcing cord 44 covered by the resin layer 46 in this manner. Note that the number of winding circuits of the resin-covered cord 42 (three in the present exemplary embodiment) and the number of the reinforcing cords 44 disposed in each winding (three in the present exemplary embodiment) may be adjusted as appropriate according to purpose. As can be seen from the above, various implementations of the present disclosure are possible.

The disclosure of Japanese Patent Application No. 2018-119352, filed on June 22, 2018, is incorporated in its entirety by reference herein. All cited documents, patent applications, and technical standards mentioned in the present specification are incorporated by reference in the present specification to the same extent as if each individual cited document, patent application, or technical standard was specifically and individually indicated to be incorporated by reference.

**Claims**

1. A resin-covered cord comprising:

   n number of individual cords, disposed so as to be mutually spaced apart from each other;
   a covering resin that covers the cords; and
   an adhesive resin that is disposed between the cords and the covering resin and that has a greater tensile elastic modulus than the covering resin;
   wherein Equation (1) is satisfied, in which
   A is a total value of a width direction dimension of a portion where the cords and the adhesive resin are disposed, and B is a maximum value of a thickness direction dimension.

$$B < (A/n) \qquad (n \geq 1) \qquad \text{Equation (1)}.$$

2. The resin-covered cord of claim 1, wherein the adhesive resin is continuous in a width direction.

3. A pneumatic tire comprising:

   a carcass that is formed spanning a pair of bead cores; and
   a resin-covered belt layer that is disposed at a tire radial direction outside of the carcass and that is formed by winding the resin-covered cord of claim 1 or claim 2 in a spiral pattern.

4. A pneumatic tire comprising:

   a pair of bead cores, each formed by winding the resin-covered cord of claim 1 or claim 2 in a spiral pattern;
   a carcass that is formed spanning the bead cores; and
   a belt layer that is disposed at a tire radial direction outside of the carcass.

FIG.1

FIG.2

# FIG.3A

# FIG.3B

FIG.4A

FIG.4B

FIG.4C

FIG.4D

## FIG.5A

## FIG.5B

## FIG.5C

## FIG.6A

## FIG.6B

## INTERNATIONAL SEARCH REPORT

| International application No. |
| --- |
| PCT/JP2019/023516 |

### A. CLASSIFICATION OF SUBJECT MATTER

Int.Cl.  B60C1/00(2006.01)i,     B60C9/20(2006.01)i,     B60C15/04(2006.01)i,
          D07B1/06(2006.01)i

According to International Patent Classification (IPC) or to both national classification and IPC

### B. FIELDS SEARCHED

Minimum documentation searched (classification system followed by classification symbols)
Int.Cl. B60C1/00, B60C9/20, B60C15/04, D07B1/06

Documentation searched other than minimum documentation to the extent that such documents are included in the fields searched
Published examined utility model applications of Japan    1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2016-199689 A (BRIDGESTONE CORPORATION) 01 December 2016, claims, paragraphs [0126]-[0129], fig. 6 & US 2018/0086140 A1, claims, paragraphs [0209]-[0212], fig. 6 & WO 2016/163425 A1 & EP 3281966 A1 & CN 107428933 A | 1 |
| Y | JP 2017-144997 A (BRIDGESTONE CORPORATION) 24 August 2017, claims, paragraphs [0020], [0061] (Family: none) | 1 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 03 September 2019 (03.09.2019) | 17 September 2019 (17.09.2019) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2019/023516

C (Continuation). DOCUMENTS CONSIDERED TO BE RELEVANT

| Category* | Citation of document, with indication, where appropriate, of the relevant passages | Relevant to claim No. |
|---|---|---|
| A | JP 2013-509501 A (COMPAGNIE GENERALE DES ETABLISSEMENTS MICHELIN) 14 March 2013, fig. 3 & US 2012/0267023 A1, fig. 3 & WO 2011/051204 A1 & EP 2494105 A1 & FR 2952076 A1 & CN 102713052 A | 1-4 |
| A | JP 2017-532416 A (COMPAGNIE GENERALE DES ETABLISSEMENTS MICHELIN) 02 November 2017, fig. 4-5 & US 2017/0233556 A1, fig. 4-5 & WO 2016/058944 A1 & EP 3207080 A1 & FR 3027027 A1 & CN 107135655 A | 1-4 |
| A | WO 2016/190390 A1 (BRIDGESTONE CORPORATION) 01 December 2016, fig. 2 & US 2018/0154693 A1, fig. 2 & EP 3305547 A1 & CN 107614283 A | 1-4 |
| A | JP 2017-109619 A (BRIDGESTONE CORPORATION) 22 June 2017, comparative examples 1-5 & US 2018/0361796 A1, comparative examples 1-5 & WO 2017/104472 A1 & EP 3392060 A1 & CN 108367596 A | 1-4 |

Form PCT/ISA/210 (continuation of second sheet) (January 2015)

**EP 3 812 167 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014210487 A

- JP 2018119352 A

### Non-patent literature cited in the description

- Japan Automobile Tyre Manufacturers Association (JATMA) Year Book. 2018